(19) Europäisches Patentamt
European Patent Office
Office européen des brevets

(11) **EP 2 182 176 A2**

(12) **EUROPÄISCHE PATENTANMELDUNG**

(43) Veröffentlichungstag:
**05.05.2010 Patentblatt 2010/18**

(51) Int Cl.:
***F01D 25/00*** *(2006.01)*

(21) Anmeldenummer: **09172753.7**

(22) Anmeldetag: **12.10.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **03.11.2008 DE 102008055631**

(71) Anmelder: **Rolls-Royce Deutschland Ltd & Co KG 15827 Blankenfelde-Mahlow (DE)**

(72) Erfinder: **Clemen, Carsten 15749, Mittenwalde (DE)**

(74) Vertreter: **Wablat, Wolfgang Patentanwalt Dr. Dr. W. Wablat Potsdamer Chaussee 48 14129 Berlin (DE)**

(54) **Nabenkonus für ein Flugzeugtriebwerk**

(57) Die Erfindung bezieht sich auf einen Nabenkonus (20, 30, 40) für ein Flugzeugtriebwerk mit einem Propeller (2, 32, 42) oder mit einem von einem Gehäuse (5) ummantelten Bläser (Fan) (3). Um Strömungsverluste des Nabenkonus zu reduzieren und den Wirkungsgrad des Triebwerkes zu erhöhen, ist der Kurvenverlauf des Nabenkonus (20, 30, 40) mit der Gleichung bzw. dem arithmetischen Ausdruck beschreibbar,

$$S(x) = R_{max} * \left\{ 1 - \left[ \left( x - L_{max} \right) / L_{max} \right]^2 \right\}^{1/M}$$

wobei folgende Größen innerhalb der Gleichung wie folgt definiert sind: S(x): Form des Konus (20, 30, 40), definiert entlang der horizontalen Konus- bzw. Maschinenachse x; $R_{max}$: Maximale Ausdehnung (26) des Konus (20, 30, 40) in radialer Richtung r, d.h. senkrecht zur Konus- bzw. Maschinenachse x in Richtung der radialen Achse r; $L_{max}$: Maximale Ausdehnung (25) des Konus (20, 30, 40) in Konus- bzw. Maschinenachsrichtung x und M: Wert, der die Form S(x) beschreibt (Fig. 7).

Fig. 7

EP 2 182 176 A2

**Beschreibung**

Die Erfindung bezieht sich auf einen Nabenkonus für ein Flugzeugtriebwerk.

Ein Flugzeugtriebwerk mit einem Propeller oder einem mit einem Gehäuse ummantelten Bläser (Fan) zeichnet sich dadurch aus, dass vor dem Propeller oder dem Bläser ein Nabenkonus angeordnet ist, der so gestaltet ist, dass die ankommende Strömung möglichst günstig auf den Nabenradius des Bläsers bzw. Propellers geführt wird. Der Nabenkonus rotiert mit dem Propeller bzw. Bläser. Wenn die ankommende Strömung über die Kontur des Nabenkonus fließt, bildet sich entlang der Kontur eine mit der Lauflänge anwachsende Grenzschicht aus. Diese Grenzschicht bewirkt, dass die Bläser- bzw. Propellernabe ungünstig, d.h. sehr langsam und unter steilem Anströmwinkel angeströmt wird. Zum Stand der Technik bei Turboprop-Flugtriebwerken wird auf US 4796424A und US 2004179941A verwiesen.

Diese ankommende Grenzschicht, die eine Dicke im Bereich von Millimetern aufweist, bewirkt, dass die Bläser- bzw. Propeller-nabenprofile ungünstig, d.h. sehr langsam und unter steilem Anströmwinkel, angeströmt werden. Dies ist unerwünscht, da eine steile Anströmung die Strömungsablösung auf den nabennahen Schaufelprofilen begünstigt. Diese führt zu Verlusten und zu einer ungünstigen Abströmung des Bläsers bzw. Propellers. Die Verluste reduzieren den Wirkungsgrad, und die ungünstige Abströmung beeinflusst den Wirkungsgrad und die Strömungsverhältnisse an den nachfolgenden Triebwerkskomponenten negativ.

Der Erfindung liegt die Aufgabe zugrunde, einen Nabenkonus für ein Flugtriebwerk zu schaffen, bei dem diese Nachteile vermieden sind.

Zur Lösung dieser Aufgabe sieht die Erfindung einen Konturverlauf des Nabenkonus vor, der mit folgender Gleichung bzw. folgendem arithmetischen Ausdruck beschreibbar ist:

$$S(x) = R_{max} * \left\{ 1 - \left[ \left( x - L_{max} \right) / L_{max} \right]^2 \right\}^{1/M}$$

Dabei sind folgende Größen innerhalb der Gleichung definiert:

$S(x)$:    Form des Konus, definiert entlang der horizontalen Ko- nus- bzw. Maschinenachse x,

$R_{max}$:    Maximale Ausdehnung des Konus in radialer Richtung, d.h. senkrecht zur Maschinenachse in Richtung der radialen Achse r,

$L_{max}$:    Maximale Ausdehnung des Konus in Richtung der Konus- bzw. Maschinenachse,

M:    Wert, der die Form $S(x)$ beschreibt. M ist eine positive reelle Zahl.

Um die Grenzschichtdicke zu minimieren, definiert die Erfindung eine Schar von optimalen Formgebungen der Naben- bzw. Konus-geometrie. Die Nabengeometrie lässt sich mit Hilfe der mathema-tischen Gleichung so definieren, dass ihr Verlauf stetig und monoton ist und somit keine Störung der Grenzschicht erfolgt.

Gemäss der oben genannten Gleichung lässt sich durch geeignete Wahl des Wertes M eine Schar von Konusformen definieren, die einen minimalen Verlust und eine minimale Grenzschichtdicke erzeugen.

Die so definierte Kurvenschar umfasst alle Werte von M zwischen 1.50 und 1.98. Den minimalen Verlust erzeugen die Formen, die mit den Werten von M zwischen 1.89 und 1.945 erzeugt werden. Die optimalen Grenzkonturen der Formkurve $S(x)$ liegen zwischen M = 1.50 und 1.98.

Die mit der angegebenen Gleichung und den angegebenen Werten für den Wert M, der die Form $S(x)$ beschreibt, erzeugten Nabenformen weisen für einen Testfall einen um 17% niedrigeren Verlust als zum Beispiel eine elliptische Nabenkontur auf, die üblicherweise für die Nabenkontur eines Propellers gewählt wird. Anwendungsbeispiele für eine optimierte Kontur werden nachfolgend näher beschrieben. Die optimale Nabenkontur führt zu besserer Anströmung des Propellers bzw. Bläsers, der damit effizienter wird, und sie reduziert den Widerstandsbeiwert des Konus. Beides führt zu reduziertem Kraftstoffverbrauch.

Weitere vorteilhafte Ausgestaltungen der Erfindung ergeben sich aus den Unteransprüchen.

Erfindungsgemäß ist der Wert M eine positive reelle Zahl. Ferner wird eine Schar von Konusformen durch geeignete Wahl des Wertes M definiert, wobei die definierte Kurvenschar alle Werte von M zwischen 1.50 und 1.98 umfasst. Schließlich ist mit dem Wert M zwischen 1.89 und 1.945 ein Nabenkonus beschreibbar, mit dem ein minimaler Verlust an Leistung des Flugtriebwerkes erreichbar ist.

Ausführungsbeispiele des erfindungsgemäßen Nabenkonus für ein Flugzeugtriebwerk mit einem Propeller oder einem von einem Gehäuse ummantelten Bläser (Fan) sind in den nachfolgenden Zeichnungen dargestellt. Es zeigt:

Fig.1   einen Nabenkonus für einen Propeller gemäß dem Stand der Technik,

Fig. 2   einen Nabenkonus für eine von einem Gehäuse ummantel- ten Bläser (Fan) gemäß dem Stand der Technik,

Fig. 3   die Grenzschichtdicke bei einem Nabenkonus gemäß dem Stand der Technik nach Fig. 1 oder 2,

Fig. 4   die Anströmwinkel und die Anströmung bei einem Naben- konus gemäß dem Stand der Technik nach Fig. 1 oder 2,

Fig. 5   das Nabenprofil und die Drehrichtung bei einem Propel- ler gemäß dem Stand der Technik nach Fig. 1,

Fig. 6   Definitionen der Konusform im x-y-Koordinatensystem,

Fig. 7   die nach der erfindungsgemäßen Gleichung ermittelten optimalen Konusformen als Konusform S(x) über der x- Achse,

Fig. 8   ein Ausführungsbeispiel eines erfindungsgemäßen Naben- konus mit Einzelpropeller als Traktor-Konfiguration und

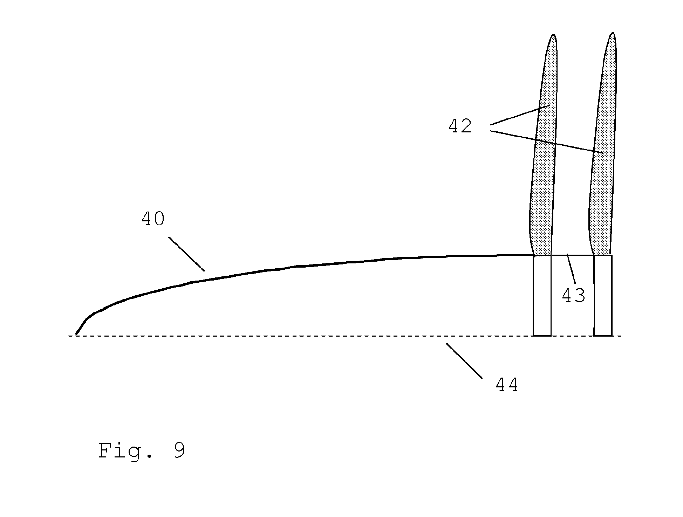

Fig. 9   ein Ausführungsbeispiel eines erfindungsgemäßen Naben- konus mit Doppelpropeller als Pusher-Konfiguration.

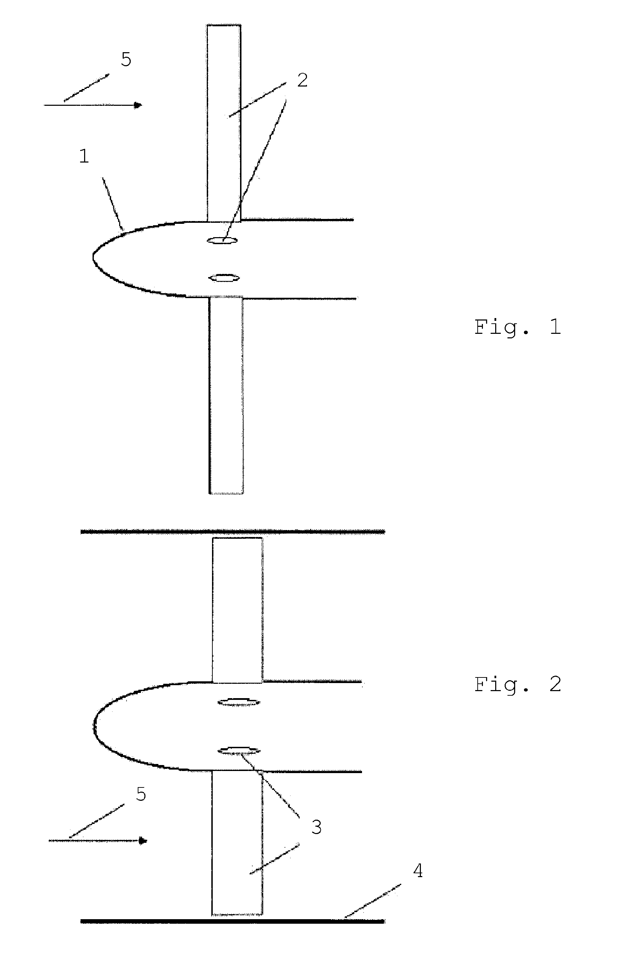

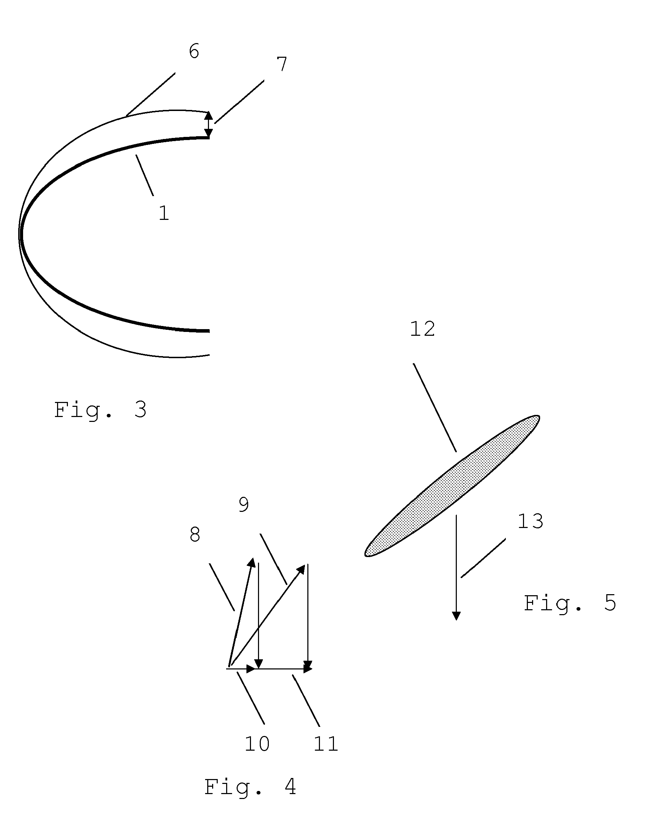

Die Fig. 1 zeigt einen im Wesentlichen elliptischen Nabenkonus 1 mit einem Propeller 2 eines Turboprop-Flugtriebwerkes gemäß dem Stand der Technik. Die Fig. 2 zeigt einen im Wesentlichen elliptischen Nabenkonus 1 mit einem von einem Gehäuse 4 ummantelten Bläser (Fan) 3 eines Flugtriebwerkes gemäß dem Stand der Technik. Die ankommende Strömung ist jeweils mit einem Pfeil 5 bezeichnet. Das Flugzeugtriebwerk mit dem Propeller 2 (Fig. 1) oder mit dem vom Gehäuse 4 ummantelten Bläser (Fan) 3 (Fig. 2) zeichnet sich dadurch aus, dass vor dem Propeller 2 oder dem Bläser 3 ein regelmäßig eine elliptische Form aufweisender Nabenkonus 1 angeordnet ist, der so gestaltet sein sollte, dass die ankommende Strömung möglichst günstig auf den Nabenradius des Propellers 2 bzw. Bläsers 3 geführt wird. Der Nabenkonus 1 rotiert mit dem Propeller 2 bzw. Bläser 3. Wenn die ankommende Strömung über die Kontur des Nabenkonus 1 fließt, bildet sich entlang der Kontur eine mit der Lauflänge anwachsende Grenzschicht 6 (Fig. 3) aus. Diese Grenzschicht 6 bewirkt, dass der Nabenkonus 1 des Propellers 2 bzw. des Bläsers 3 ungünstig, d.h. sehr langsam und unter steilem Anströmwinkel, angeströmt wird
Die ankommende Grenzschicht 6, die eine Grenzschichtdicke 7 (Fig. 3) im Bereich von Millimetern aufweist, bewirkt bei den Nabenkonen 1 gemäß dem Stand der Technik nach den Fig. 1 und 2, dass die Profile der Nabenkonen 1 für den Propeller 2 bzw. den Bläser 3 ungünstig, d.h. mit sehr langsamer Anströmung 10 und unter steilem Anströmwinkel 8, angeströmt werden (Fig. 4). Dies ist unerwünscht, da eine steile Anströmung bzw. ein steiler Anströmwinkel 8 die Strömungsablösung auf den nahe dem Konus 1 gelegenen Profilen des Propellers 2 bzw. des Bläsers 3 begünstigt. Dies führt zu Verlusten und zu einer ungünstigen Abströmung des Propellers 2 bzw. des Bläsers 3. Die Verluste reduzieren den Wirkungsgrad, und die ungünstige Abströmung beeinflusst den Wirkungsgrad und die Strömungsverhältnisse an den nachfolgenden Triebwerkskomponenten negativ.
Günstiger sind ein gewünschter flacherer Anströmwinkel 9 mit gewünschter schnellerer Anströmung 11 gemäß Fig. 4. Die Fig. 5 zeigt ein Nabenprofil 12 und die Drehrichtung 13.
Um dies zu erreichen und um die Grenzschichtdicke 7 zu minimieren, wird eine Schar von optimalen Formgebungen der Geometrie des erfindungsgemäßen Nabenkonus 20 definiert. Die Geometrie des Nabenkonus 20 lässt sich mit Hilfe der nachfolgenden mathematischen Gleichung bzw. mit folgendem arithmetischen Ausdruck beschreiben und so definieren, dass der Verlauf des Nabenkonus 20 stetig und monoton ist und somit keine Störung der Grenzschicht 7 erfolgt:

$$S(x) = R_{max} * \left\{ 1 - \left[ (x - L_{max}) / L_{max} \right]^2 \right\}^{1/M}$$

Dabei sind folgende Größen innerhalb der Gleichung definiert:

S(x): Form des Konus 20, definiert entlang der horizontalen Konus- bzw. Maschinenachse x,

$R_{max}$: Maximale Ausdehnung des Konus 20 in radialer Richtung, d.h. senkrecht zur Maschinenachse x in Richtung der ra- dialen Achse r,

$L_{max}$: Maximale Ausdehnung des Konus 20 in Richtung der Konus- bzw. Maschinenachse x,

M: Wert, der die Form S(x) beschreibt. M ist eine positive reelle Zahl.

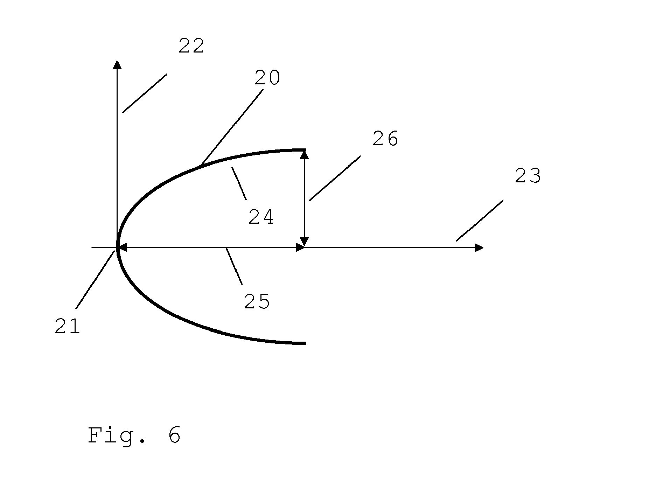

Zur Definition der geometrischen Form des erfindungsgemäßen Nabenkonus 20 sind in Fig. 6 der Ursprung des x-r-Koordinatensystems an der Spitze 21 des Nabenkonus 20, die senkrecht zur horizontalen Konus- bzw. Maschinenachse 23 und radial verlaufende r-Achse 22, die Außenkontur 24 des Nabenkonus 20 und die maximalen Ausdehnungen 25 und 26 des Nabenkonus 20 in x-Richtung bzw. in r-Richtung dargestellt.

Um die Grenzschichtdicke 7 zu minimieren, definiert die Erfindung eine Schar von optimalen Formgebungen der Geometrie des Nabenkonus 20. Diese lässt sich mit Hilfe der mathematischen Gleichung so definieren, dass ihr Verlauf stetig und monoton ist und somit keine Störung der Grenzschicht erfolgt.

Gemäß der oben genannten Gleichung lässt sich durch geeignete Wahl des Wertes M eine Schar von Konusformen definieren, die einen minimalen Verlust und eine minimale Grenzschichtdicke erzeugen.

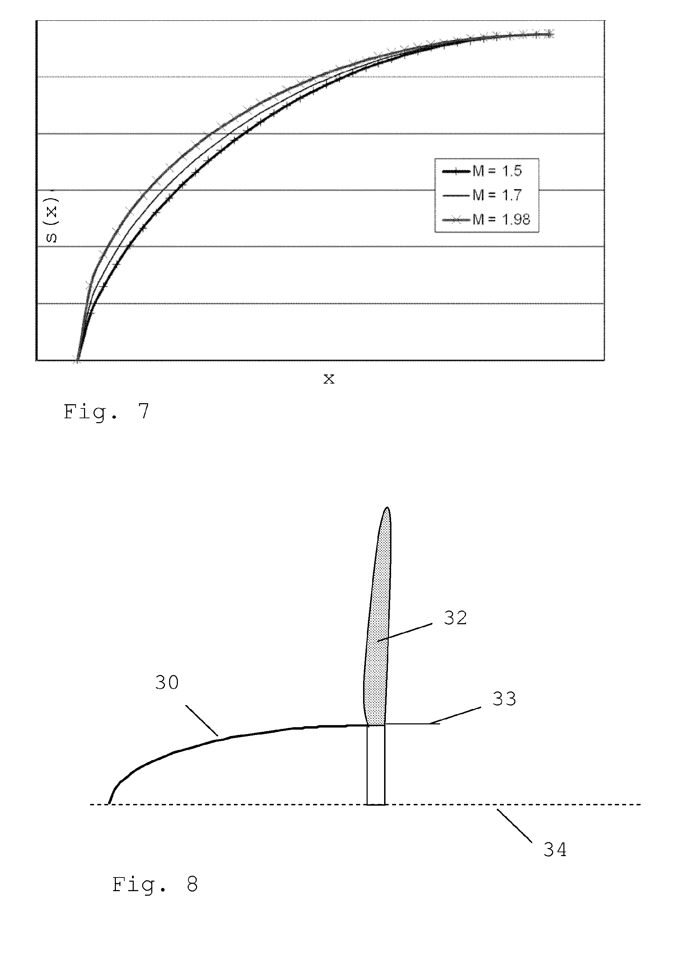

Die so definierte Kurvenschar umfasst gemäß Fig. 7 alle Werte von M zwischen 1.50 und 1.98. Den minimalen Verlust erzeugen die Formen, die mit den Werten von M zwischen 1.89 und 1.945 erzeugt werden. Die optimalen Grenzkonturen der Formkurve S(x) liegen zwischen M = 1.50 und 1.98. Die Figur 7 zeigt eine weitere Formkurve S(x) für M = 1.7.

Die mit der angegebenen Gleichung und den angegebenen Werten für den Wert M, der die Form S(x) beschreibt, erzeugten Nabenformen weisen für einen Testfall einen um 17% niedrigeren Verlust als zum Beispiel eine elliptische Nabenkontur auf, die üblicherweise für die Nabenkontur eines Propellers 2 gewählt wird. Die optimale Nabenkontur führt zu besserer Anströmung des Propellers 2 bzw. Bläsers 3, der damit effizienter wird, und sie reduziert den Widerstandsbeiwert des Nabenkonus 20. Beides führt zu reduziertem Kraftstoffverbrauch.

Ein Ausführungsbeispiel eines erfindungsgemäß optimierten Nabenkonus 30 mit Nabenkörper 33 und Maschinen- bzw. Konusachse 34 für einen Einzelpropeller 32 als Traktor-Konfiguration ist in Fig. 8 dargestellt. Hier rotiert der Nabenkonus.

Ein weiteres Ausführungsbeispiel eines erfindungsgemäß optimierten Nabenkonus 40 mit Nabenkörper 43 und Maschinen- bzw. Konusachse 44 für einen Doppelpropeller 34 als Pusher-Konfiguration ist in Fig. 8 dargestellt. Hier steht der Nabenkonus fest.

**Bezugszeichenliste**

1 Nabenkonus
2 Propeller
3 Bläser (Fan)
4 Gehäuse
5 ankommende Strömung
6 Grenzschicht
7 Grenzschichtdicke
8 steiler Anströmwinkel
9 gewünschter Anströmwinkel
10 langsame Anströmung
11 gewünschte Anströmung
12 Nabenprofil
13 Drehrichtung
20 Nabenkonus
21 Spitze des Konus
22 r-Achse
23 Maschinen-/Konus-Achse
24 Außenkontur des Nabenkonus
25 max. Ausdehnung in x-Richtung
26 max. Ausdehnung in r-Richtung

30 optimierter Nabenkonus
32 Propeller
33 Nabenkörper
34 Maschinen-/Konus-Achse
40 optimierter Nabenkonus
42 Propeller
43 Nabenkörper
44 Maschinen-/Konus-Achse

**Patentansprüche**

1. Nabenkonus für ein Flugzeugtriebwerk mit einem Propeller oder mit einem von einem Gehäuse ummantelten Bläser (Fan), **dadurch gekennzeichnet, dass** der Kurvenverlauf des Nabenkonus (20, 30, 40) der Gleichung bzw. dem arithmetischen Ausdruck beschreibbar ist,

$$S(x) = R_{max} * \{ 1 - [ ( x - L_{max} ) / L_{max} ]^2 \}^{1/M}$$

wobei folgende Größen innerhalb der Gleichung wie folgt definiert sind:

$S(x)$: Form des Konus (20, 30, 40), definiert entlang der horizontalen Konus- bzw. Maschinenachse x,
$R_{max}$: Maximale Ausdehnung (26) des Konus (20, 30, 40) in radialer Richtung r, d.h. senkrecht zur Konus- bzw. Maschinenachse x in Richtung der radialen Achse r,
$L_{max}$: Maximale Ausdehnung (25) des Konus (20, 30, 40) in Konus- bzw. Maschinenachsrichtung x,
M: Wert, der die Form $S(x)$ beschreibt.

2. Nabenkonus nach Anspruch 1, **dadurch gekennzeichnet, dass** der Wert M eine positive reelle Zahl ist.

3. Nabenkonus nach Anspruch 1 oder 2, **dadurch gekennzeichnet, dass** eine Schar von Konusformen durch geeignete Wahl des Wertes M definiert wird.

4. Nabenkonus nach Anspruch 3, **dadurch gekennzeichnet, dass** die definierte Kurvenschar alle Werte von M zwischen 1.50 und 1.98 umfasst.

5. Nabenkonus nach Anspruch 4, **dadurch gekennzeichnet, dass** mit dem Wert M zwischen 1.89 und 1.945 ein Nabenkonus (20, 30, 40) beschreibbar ist, mit dem ein minimaler Verlust an Leistung des Flugtriebwerkes erreichbar ist.

5

2

1

Fig. 1

5

3

4

Fig. 2

Fig. 3

Fig. 4

Fig. 5

Fig. 6

Fig. 7

Fig. 8

42

40

43

44

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4796424 A
- US 2004179941 A